# EUROPÄISCHE PATENTSCHRIFT

(11) **EP 2 016 992 B1**
(45) Veröffentlichungstag und Bekanntmachung des Hinweises auf die Patenterteilung: **30.05.2012**
(21) Anmeldenummer: 07013905.0
(22) Anmeldetag: 16.07.2007
(51) Int. Cl.: B01D 63/06, B01D 61/16, C02F 1/44, B01D 61/14, B08B 3/14

(54) **Vorrichtung und Verfahren zum Aufbereiten von in Brauereien anfallenden Reinigungsflüssigkeiten**
Device and method for purifying cleaning fluids used in breweries
Dispositif et procédé destinés au traitement de liquides de nettoyage utilisés dans des brasseries

(43) Veröffentlichungstag der Anmeldung: 21.01.2009
(73) Patentinhaber: KRONES Aktiengesellschaft, 93073 Neutraubling (DE)
(72) Erfinder: Nissen, Martin, 24986 Rüde (DE); Wasmuht, Klaus, 91792 Ellingen (DE); Stippler, Kurt, Dr., 85417 Marzling (DE); Folz, Cornelia, 13353 Berlin (DE); Momsen, Jan, 25852 Bordelum (DE); Kirchhoff, Timm, 24977 Westerholz (DE)
(74) Vertreter: Grünecker, Kinkeldey, Stockmair & Schwanhäusser

(56) Entgegenhaltungen:
- EP-A- 1 705 155
- US-A- 5 244 579
- US-A- 5 772 900
- US-A1- 2005 218 077
- 'Umkehrosmose', [Online] Gefunden im Internet: <URL:http://de.wikipedia.org/wiki/Umkehrosm ose> [gefunden am 2008-03-12]
- "Membranfiltration" In: "Römpp", 1998, GEORG THIEME VERLAG, Stuttgart pages 2584-2585,
- "Umgekehrte Osmose" In: "Römpp", 1999, GEORG THIEME VERLAG, Stuttgart
- HOTTINGER WASSERAUFBEREITUNGSANLAGEN AG: 'Dead-End Filtration', [Online] Gefunden im Internet: <URL:http://www.hottinger-wasser.ch/anlagen /dead-end-filtration.html> [gefunden am 2010-07-26]
- MULDER M ED - MULDER M: "Basic Principles of Membrane Technology, Passage", 1 January 1990 (1990-01-01), BASIC PRINCIPLES OF MEMBRANE TECHNOLGOY, DORDRECHT, KLUWER, NL, PAGE(S) 314,319 - 321, XP002496733,

## Beschreibung

Die Erfindung betrifft ein Verfahren und eine Vorrichtung zum Aufbereiten von, insbesondere bei der Flaschenreinigung oder in CIP-Anlagen, z. B. bei der Sudhausreinigung in Brauereien anfallenden Reinigungsflüssigkeiten.

Aus der US-A-5,244,579 ist bereits eine Umkehrosmoseanlage mit einem Grobfilter sowie zwei sich darin anschließenden Feinfiltern und zwei in Reihe geschalteten Umkehrosmosemodulen bekannt. Das Permeat der Umkehrosmosemodule wird in einer Leitung zusammengefasst und gegebenenfalls über ein weiteres Umkehrosmosemodul gereinigt. Das Konzentrat aus den Umkehrosmosemodulen wird einem Tank zugeführt oder über eine Leitung verworfen. Das Grobfiltrat wird nicht im Kreislauf geführt. Zum Rückspülen wird Konzentrat verwendet, das ansonsten verworfen werden würde. Diese Druckschrift zeigt keinen Cross-Flow-Filter zur Mikrofiltration und auch keine Rückführleitung durch die das Grobfiltrat durch den Mikrofilter im Kreis geführt wird.

Die Druckschrift EP 1 705 155 zeigt einen Grobfilter in Form eines Hydrozyklons und einen Feinfilter. Ein Rückspülen des Grobfilters mit Grobfiltrat ist hier nicht gezeigt.

Auch aus der US-A-5,772,900 und US2005/218077 A1 sind bereits Filteranlagen zum Filtern von Flüssigkeiten bekannt.

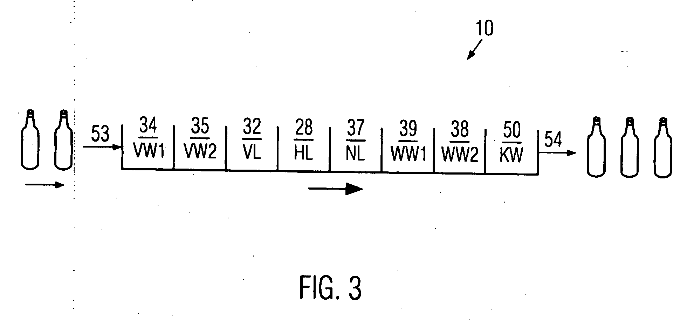

In Brauereien erfolgt die Sudgefäßreinigung, ebenso wie die Flaschenreinigung, mit Hilfe von Reinigungslaugen. Flaschen werden beispielsweise mit einer Flaschenreinigungsanlage, wie sie grob schematisch in Figur 3 gezeigt ist, gereinigt. Derartige Flaschenreinigungsanlagen 10 umfassen, wie später noch ausführlich beschrieben wird, beispielsweise ein Vorlaugebad 32, ein Hauptlaugebad 28, sowie ein Nachlaugebad 37 als erste Spülzone. Bei der Flaschenreinigung verschlechtert sich jedoch der Zustand der Reinigungslauge trotz Zuschärfung, weil sich immer mehr Schlamm absetzt und lösliche, unlösliche oder kolloidal gelöste Bestandteile in der Lauge enthalten sind. Dazu gehören u. a. Papierfasern von zerfaserten Etiketten, Farbpigmente, Bindemittel aus Etiketten, Nassfestmittel, Leimungsmittel, ausgefällter Schlamm von Kalkbestandteilen und anhaftender Schmutz aus Flaschen. Bei der Reinigung von Sudhausgefäßen fallen u. a. größere Treber- und Trubrestmengen sowie Ablagerungen von den Kochgefäßen zum Maische- und Würzekochen an.

Als Reinigungsflüssigkeit werden jedoch nicht nur Reinigungslaugen verwendet. Insbesondere bei CIP-Anlagen werden als Reinigungsflüssigkeiten auch Säuren und Desinfektionsmittel verwendet, die gereinigt werden müssen vor allem muss der Schlamm, der sich am Boden der CIP-Behälter absetzt vor jedem Reinigungsschritt in den Kanal abgelassen werden.

Die Aufbereitung der entsprechenden Reinigungsflüssigkeiten erfolgt heute in zunehmendem Maße durch Filtration. Bei den im Stand der Technik verwendeten Reinigungsanlagen ergibt sich jedoch das Problem, dass die Filterflächen, insbesondere durch die großen Mengen an Verunreinigungen, wie Papierfasern von Etikettresten, Treber- und Trubresten nach kurzer Zeit zusetzen. Derartige Reinigungsanlagen sind daher sehr wartungsintensiv und können nicht kontinuierlich betrieben werden. Insbesondere bei der Cross-Flow-Filtration von Reinigungsflüssigkeit werden zur Verhinderung von der Aufkonzentration der Verschmutzung im Cross-Flow-Filterkreislauf Feedbackbehälter mit großem Volumen verwendet. Dies hat den Nachteil, dass am Ende der Woche das große Tankvolumen verworfen werden muss. Die großen Volumina in der Filtrationseinheit führen zu einer erhöhten Wärmeabstrahlung und einer verminderten Verfügbarkeit, da ein Nachfüllen der Laugenbehälter der Flaschenreinigungsmaschine bei Inbetriebnahme des Filtrationssystems notwendig ist, was erhebliche Stillstandszeiten bei der Abfüllung bedeutet.

Hiervon ausgehend liegt der vorliegenden Erfindung die Aufgabe zugrunde, eine Vorrichtung und ein Verfahren zum Aufbereiten von Reinigungsflüssigkeiten bereitzustellen, um die stark verschmutzte Reinigungsflüssigkeiten einfach, umweltfreundlich und kontinuierlich zu reinigen.

Erfindungsgemäß wird diese Aufgabe durch die Merkmale der Ansprüche 1 und 11 gelöst.

Durch eine Kombination aus Grob- und Feinfilter bzw. Microfilter ergibt sich der Vorteil, dass die Filteranordnung, insbesondere der Cross-Flow-Filter (Feinfilter) nicht so schnell zusetzt. In geschickter Weise wird dazu ein Cross-Flow-Filter verwendet. Der Ausdruck Cross-Flow-Filter ist ein Fachausdruck und bezeichnet Filter, bei denen das Unfiltrat parallel entlang einer Filtermembran fließt. Ein Teil des Unfiltrats durchdringt quer zur Flussrichtung des Unfiltrats die Membran und kann als Filtrat abgeleitet werden. Dabei lagern sich Feststoffe des Unfiltrats an der Membran des Filters ab. Mit dem parallelen Anströmen der Membran werden die sich ablagernden Feststoffe kontinuierlich vom Flüssigkeitsstrom mitgerissen, so dass auf der Membran ein Gleichgewicht zwischen Neubelegung und Abreinigung der Membran erreicht wird.

Gemäß der Erfindung, ist eine Rückführleitung vorgesehen, die die grobgefilterte Reinigungsflüssigkeit, d. h. das Grobfiltrat des Grobfilters im Kreis durch den Cross-Flow-Filter führt. Somit kann ein ausreichender Fluss und eine hohe Filtereffizienz gewährleistet werden. Um nun in geschickter Weise das Aufkonzentrieren von Verunreinigungen des im Kreislauf geführten Grobfiltrats zu verhindern, ist eine Ableitung vorgesehen, die aus dem Kreis, insbesondere von der Rückführleitung abzweigt und mit einer Rückspüleinrichtung verbunden ist. Somit kann in geschickter Weise die mit Verunreinigungen aufkonzentrierte Reinigungsflüssigkeit zur Rückspülung des Grobfilters verwendet werden. Das bedeutet, dass einerseits durch das Ableiten des Grobfiltrats eine Aufkonzentrierung von Verschmutzung verhindert werden kann, wobei andererseits dieses abgeleitete Grobfiltrat in effizienter Weise zur Rückspülung verwendet wird und nicht verworfen werden muss. Die vorliegende Erfindung ermöglicht, dass kein weiterer Tank zur Abpufferung des Konzentrataufbaus notwendig ist. Dies hat den weiteren Vorteil, dass am Ende der Woche kein großes Tankvolumen verworfen werden muss. Dadurch, dass das System kein großes Tankvolumen aufweist, kann das ganze System unter Druck stehen, was minimierte Pumpleistungen zur Folge hat. Kleine Füllvolumina bieten zusätzlich den Vorteil, dass die Verfügbarkeit, beispielsweise einer Flaschenreinigungsmaschine, steigt, da ein Nachfüllen der Flaschenreinigungsmaschine bei der Inbetriebnahme des Filtrationssystems nicht notwendig ist. Ferner ist vorteilhaft, dass beispielsweise sowohl zur Aufbereitung von Nachlauge als auch zur Aufbereitung von Hauptlauge einer Flaschenreinigungsmaschine das gleiche Fließschema anwendbar ist. Dies ermöglicht eine vereinfachte Fertigung, bei der je nach Anwendung lediglich der Cross-Flow-Filter, d. h. die Porenweite der entsprechenden Membran, angepasst werden muss. Unter Reinigungsflüssigkeiten sind sowohl Reinigungslauge als auch Reinigungssäure oder Desinfektionsmittel zu verstehen.

Vorteilhafterweise weist die Vorrichtung mindestens zwei parallel angeordnete, im Wechsel rückspülbare Grobfilter auf. Damit kann ein kontinuierlicher Prozess gewährleistet werden, da selbst wenn einer der Grobfilter gerade rückgespült und gereinigt wird, der zweite Grobfilter im Einsatz ist. Da ja das im Kreislauf geführte Grobfiltrat zum Rückspülen verwendet wird, kann somit häufig eine Rückspülung durchgeführt werden, was die Filtereffizienz verbessert. Der Prozess muss dabei nicht unterbrochen werden.

Vorteilhafterweise filtert der Grobfilter Teilchen einer Größe > 50 µm aus. Der Cross-Flow-Filter weist je nach Anwendung eine Porengröße in einem Bereich von <= 2µm vorzugsweise <=0,4µm auf. Gemäß einer bevorzugten Ausführungsform kann ein Scheibenfilter als Grobfilter eingesetzt werden. Ein solcher Scheibenfilter ist einfach rückspülbar.

Gemäß einem bevorzugten Ausführungsbeispiel bereitet die Vorrichtung als Reinigungslauge Hauptlauge aus einem Hauptlaugebad einer Flaschenreinigungsmaschine auf und umfasst eine Feinfiltratleitung, die das Feinfiltrat aus dem Cross-Flow-Filter erneut dem Hauptlaugebad zuführt. Die erfindungsgemäße Vorrichtung ist gleichzeitig auch geeignet zum Aufbereiten von Nachlauge aus einem Nachlaugebad einer Flaschenreinigungsmaschine und umfasst dann eine Feinfiltratleitung, die das Feinfiltrat aus dem Cross-Flow-Filter erneut dem Nachlaugebad zuführt.

Beim Aufbereiten von Hauptlauge kann der Kreis eine weitere Abzweigleitung umfassen zum Verwerfen eines Teils des im Kreislauf geführten Grobfiltrats. Wenn also die Aufkonzentrierung der Verunreinigungen im Cross-Flow-Filter-Kreislauf zu groß wird, kann zusätzlich ein Teil des im Kreislauf geführten Grobfiltrats abgezweigt und verworfen werden, so dass die Konzentration der Verunreinigung abnimmt. Somit kann eine zu starke Gelschichtbildung auf der Membranoberfläche des Cross-Flow-Filters und ein vorzeitiges Zusetzen verhindert werden.

Bei der Reinigung von Nachlauge kann der Kreis ebenfalls eine weitere Abzweigleitung umfassen, zum Zuführen eines Teils des im Kreis geführten Grobfiltrats zu einem Vorlaugebad. Somit kann in vorteilhafter Weise das Aufkonzentrieren von Verunreinigungen im Membranfiltrationskreislauf verhindert werden, wobei das Grobfiltrat gleichzeitig noch für das Vorlaugebad verwendet werden kann, da die Reinigungslauge im Vorlaugebad nicht so stark gefiltert sein muss.

Gemäß der vorliegenden Erfindung kann auch als Reinigungsflüssigkeit Reinigungslauge oder -säure oder Desinfektionsflüssigkeit aus einer CIP-Anlage aufbereitet werden, wobei das Feinfiltrat dann einem entsprechenden Lauge- oder Säure- oder Desinfektionsflüssigkeitstank zugeführt wird.

Bei dem erfindungsgemäßen Verfahren kann kontinuierlich ein bestimmter Teil des im Kreislauf geführten Grobfiltrats abgeführt werden. Der abgeführte Teil des Grobfiltrats kann auch getaktet in bestimmten Abständen während des Filtrationsprozesses abgeführt werden.

Die vorliegende Erfindung wird nachfolgend unter Bezugnahme der folgenden Figuren näher erläutert.
Figur 1 zeigt schematisch das Fließschema einer Vorrichtung gemäß der vorliegenden Erfindung.
Figur 2a zeigt schematisch einen Schnitt durch einen Scheibenfilter, der in der erfindungsgemäßen Vorrichtung verwendet wird.
Figur 2b zeigt schematisch eine Aufsicht auf eine Scheibe des in Figur 2a gezeigten Scheibenfilters.
Figur 3 zeigt schematisch die unterschiedlichen Stufen einer Flaschenreinigungsanlage.
Figur 4 zeigt grob schematisch einen Schnitt durch einen Cross-Flow-Filter.
Figur 5 zeigt einen Schnitt entlang der Linie I-I in Figur 4.
Figur 6 zeigt in perspektivischer Darstellung eine Multitubemembranfilterkerze, die in dem in Figur 4 gezeigten Filter eingesetzt wird.
Figur 7 zeigt schematisch das Grundschema einer CIP-Anlage.

Gemäß der vorliegenden Erfindung werden zum Aufbereiten von den in Brauereien anfallenden verunreinigten Reinigungsflüssigkeiten ein rückspülbarer Grobfilter, beispielsweise ein Scheibenfilter 2, in Kombination mit einem Cross-Flow-Filter 3 verwendet.

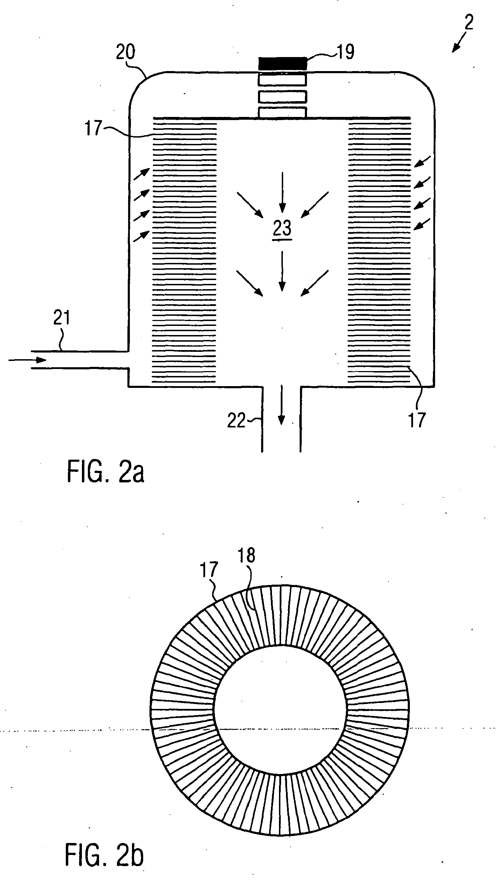

Ein Scheibenfilter ist beispielsweise in den Figuren 2a und 2b gezeigt. Der Scheibenfilter weist ein Filtergehäuse 20 auf, sowie einen Unfiltratzulauf 21 und einen Grobfiltratablauf 22. Über den Zulauf 21 wird gemäß der vorliegenden Erfindung dem Scheibenfilter 2 die Reinigungsflüssigkeit zugeführt. Der Scheibenfilter 2 weist eine Vielzahl von übereinander angeordneten Filterscheiben 17 auf. Wie aus Figur 2b hervorgeht, sind die Filterscheiben 17 als Filterringe aufgebaut. Die Scheiben 17 werden durch die Federkraft der Feder 19 zusammengepresst. Die Scheiben weisen zumindest auf einer Seite eine Riffelung 18 auf. Vorteilhafterweise erstrecken sich die Furchen oder Erhebungen 18 im Wesentlichen radial nach außen. Die Riffelung der aufeinanderliegenden Scheiben 17 ergeben somit die Filterporen, durch die das Unfiltrat den Filter passiert. Vorzugsweise kommen hier Kunststoffscheiben zum Einsatz. Das Unfiltrat wird zur Filtration über den Zulauf 21 beispielsweise tangential von außen eingeleitet und passiert, wie durch die Pfeile angedeutet ist, die Poren zwischen den einzelnen Filterscheiben 17. Das Filtrat wird dann aus dem Inneren 23 des Scheibenfilters über den Auslauf 22 abgeführt. Bei der Rückspülung wird beispielsweise ein Luft-Flüssigkeitsgemisch in den Innenraum 23 geleitet und entgegen der Pfeilrichtung zwischen den Filterscheiben aus dem Filter gedrückt. Gleichzeitig wird die Pressung der Scheiben 17 durch Verringerung der Federkraft gelockert. Die Filterporen werden dadurch vergrößert und gleichzeitig werden die einzelnen Scheiben durch die Rückspülung in Rotation versetzt. Dadurch wird eine optimale Abreinigung der Filterfläche gewährleistet.

Vorzugsweise beträgt die Filterfeinheit etwa 50 µm. Bei einer Filterfeinheit von 100 µm werden bei der Laugenfiltration noch etwa 50 % der Fasern abgeschieden.

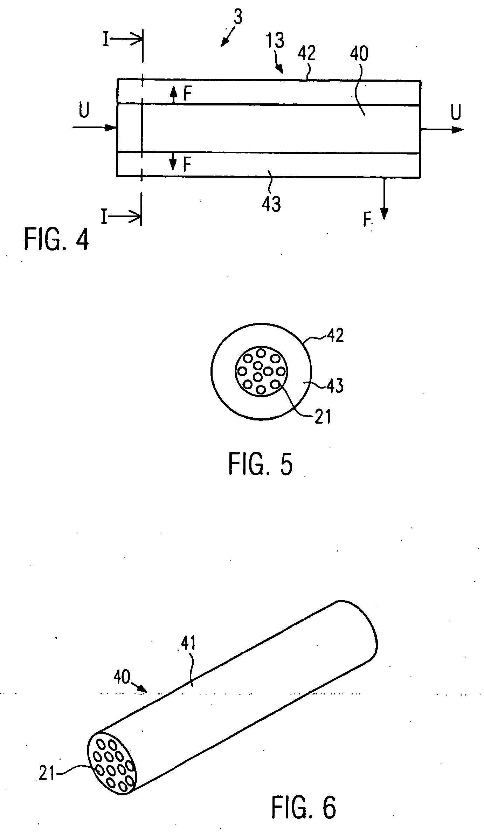

Wie im Zusammenhang mit den Figuren 4 - 6 erläutert wird zur Feinfiltration bzw. Microfiltration ein Cross-Flow-Filter 3 verwendet. Für den kontinuierlichen Betrieb mit kleinen Trenngrenzen bildet die Oberflächenfiltration mit Membranen als Filterschicht eine sinnvolle Ausgangskonstellation. Bei der Cross-Flow-Filtration strömt die zu filternde Flüssigkeit, also hier das Grobfiltrat aus dem Grobfilter 2a/b parallel an der Filtermembran entlang. Der im System herrschende Überdruck sorgt für das Durchdringen eines Teils des Unfiltrats, hier des Grobfiltrats durch die Membran, quer zur Flussrichtung des Grobfiltrats. Dabei lagern sich die mitgeführten Feststoffe des Unfiltrats, d. h. des Grobfiltrats auf der Membran an. Mit den parallelen Anströmen der Membran werden die sich ablagernden Feststoffe kontinuierlich vom Flüssigkeitsstoff mitgerissen und auf der Membran wird ein Gleichgewicht zwischen Neubelegung und Abreinigung der Membran erreicht. Die sich ablagernden Stoffe auf der Membran, welche nicht vom Flüssigkeitsstrom mitgerissen werden, bilden die sogenannte Gelschicht.

In Figuren 4 - 6 ist die Ausführungsform des derartigen Cross-Flow-Filters 3 gezeigt, wobei der Filter ein Druckgehäuse 42 sowie mindestens eine Multitubemembranfilterkerze 40 umfasst. Zwischen der Membranfilterkerze 40 und dem Druckgehäuse 42 bildet sich ein Filtratraum 43. Die Multitubemembranfilterkerze 40 weist wie in Figuren 5 und 6 näher dargestellt ist, mehrere Röhren 21 auf, die sich in Längsrichtung durch die Filterkerze 40 erstrecken. Die Filterkerze kann aus keramischem Material ausgebildet sein, wobei auf der Röhreninnenseite eine wenig µm starke Membranschicht angeordnet sein kann. Die Porengröße liegt in einem Bereich von <= 2µm vorzugsweise <=0,4µm, je nach Anwendungsfall. Bei der Filtration tritt Unfiltrat, hier Grobfiltrat aus dem Grobfilter 2 a/b in die Röhren 21 der Filterkerze 40, tritt durch die Membran in den Röhren 21 sowie die Keramik der Filterkerze und verlässt die Oberfläche 41 der Filterkerze 40 als Filtrat und tritt in den Filtratraum 43, wo es als Filtrat abgezogen werden kann. Das Unfiltrat, das durch die Röhren 21 fließt verlässt den Cross-Flow-Filter 3 und kann im Kreislauf erneut dem Cross-Flow-Filter zugeführt werden, um einen Unfiltratstrom durch den Filter aufrechtzuerhalten wie nachfolgend noch näher erläutert wird. Da bei der Reinigung in Brauereien auch heiße Reinigungsflüssigkeiten verwendet werden, die Temperaturen bis zu 90 °C aufweisen, ist eine Cross-Flow-Filteranordnung aus keramischem Material besonders geeignet.

Die erfindungsgemäße Vorrichtung und das erfindungsgemäße Verfahren können beispielsweise für Reinigungsflüssigkeiten aus CIP-Anlagen, z.B. zur Sudhausreinigung oder zur Reinigung im Flaschenkeller verwendet werden.

Das erfindungsgemäße Verfahren sowie die erfindungsgemäße Vorrichtung werden nachfolgend insbesondere im Zusammenhang mit der in Figur 3 dargestellten Flaschenreinigungsanlage näher erläutert.

Figur 3 zeigt die Hauptstufen einer Flaschenreinigungsmaschine mit einem Flascheneinschub 53. Nach einer Restentleerung durchlaufen die Flaschen nacheinander die Vorweiche 34 und die Vorweiche 35 und passieren dann das Vorlaugebad. Daraufhin erfolgt die längste und intensivste Behandlung im Hauptlaugebad 28, wo sich der meiste Schmutz und die meisten Verunreinigungen lösen. Das betrifft auch die Etiketten und den Etikettierleim. In einem Nachlaugebad 37, d. h. einer ersten Spülzone, werden die Flaschen noch einmal innerlich und äußerlich nachgereinigt und können dann mit einer Spritzeinrichtung 38/39 mit Warmwasser außen und innen bespritzt werden. Anschließend erfolgt noch eine Behandlung mit Kalt- und Frischwasser in einer entsprechenden Einrichtung 50. Am Ende werden die Flaschen über eine Flaschenabgabe 54 abgegeben.

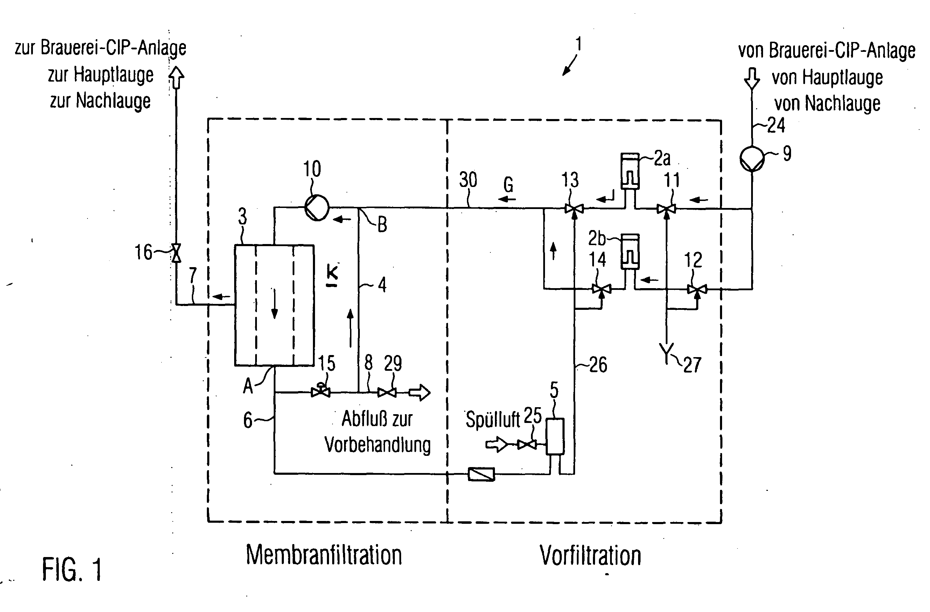

Die erfindungsgemäße Vorrichtung zum Aufbereiten von Reinigungsflüssigkeit, hier z. B. Hauptlauge oder Nachlage oder einer Reinigungsflüssigkeit einer CIP-Anlage ist in Figur 1 dargestellt.

Nachfolgend wird die Erfindung für Reinigungslauge z. B. Hauptlauge oder Nachlauge beschrieben. Das in Zusammenhang mit Figur 1 beschriebene Verfahren bzw. die Vorrichtung ist jedoch ebenfalls für eine andere Reinigungsflüssigkeit, z.B. einer Brauerei-CIP-Anlage, geeignet.

Die erfindungsgemäße Vorrichtung ist über eine Leitung 24 mit einem Vorratsbehälter für die Reinigungslauge, beispielsweise einem Hauptlaugebad oder einem Nachlaugebad verbunden. Ferner umfasst die Vorrichtung eine Pumpe 9 über die die Reinigungslauge in die erfindungsgemäße Vorrichtung gepumpt werden kann. Darüber hinaus weist die erfindungsgemäße Vorrichtung 1 hier zwei Grobfilter 2a/b auf, die parallel zueinander angeordnet sind. Die Grobfilter 2a/b sind beispielsweise Scheibenfilter wie sie im Zusammenhang mit den Figuren 2a/b näher erläutert wurden. Die Grobfilter 2a/b filtern Teilchen einer Größe > 50 µm aus. Wenn hier auch nicht dargestellt, können auch mehrere Grobfilter parallel zueinander angeordnet sein und zu Reinigungszwecken wechselweise betrieben werden. Wenn auch nicht gezeigt, könnten auch mehrere Grobfilter 2a in Reihe zu mehreren Grobfiltern 2b in Reihe parallel geschaltet sein.

Nach der Grobfiltration wird das Grobfiltrat wie durch den Pfeil G gezeigt zur Membranfiltration geleitet. Vor dem Cross-Flow-Filter 3, der beispielweise wie im Zusammenhang mit Figur 5 - 6 erläutert wurde, ist eine Pumpe 10 angeordnet. Der Cross-Flow-Filter 3 umfasst eine Filtratableitung 7, in der wiederum das Ventil 16 angeordnet ist. Die Vorrichtung umfass ferner eine Rückführleitung 4, durch die das Grobfiltrat durch den Cross-Flow-Filter 3 im Kreis K geführt wird. Zur Einstellung des Flusses ist ein Stellventil 15 vorgesehen. Somit bewegt sich das Grobfiltrat an der Membran bzw. den Membranen durch den Cross-Flow-Filter 3 hindurch, verlässt den Filter 3 und wird im Kreis über die Pumpe 10 wieder dem Cross-Flow-Filter 3 zugeführt und zwar zusammen mit neuem Grobfiltrat aus den Grobfiltern 2a/b. Die Vorrichtung umfasst ferner eine Rückspürleinrichtung 5 zum Rückspülen der Grobfilter 2a/b. Als Spülflüssigkeit wird hier in vorteilhafter Weise das im Kreis K zirkulierende Grobfiltrat verwendet. Dazu ist eine Ableitung 6 vorgesehen, die mit der Rückspüleinrichtung 5 verbunden ist. Somit wird ein vorbestimmter Teil des im Kreislauf geführten Unfiltrats bzw. Grobfiltrats in einen Spülbehälter der Rückspüleinrichtung 5 geleitet. Die Rückspülmengen liegen etwa bei 0,1 % - 0,5 % des Durchsatzes, z. B. bei einer Filtermenge in einem Größenbereich von 1 - 10m³ Lauge pro Stunde. Durch Ableiten des Grobfiltrats aus dem Cross-Flow-Filter wird ein Aufkonzentrieren von Verunreinigungen verhindert, wobei dieses abgeführte Grobfiltrat in geschickter Weise zum Rückspülen verwendet werden kann. Die Rückspüleinrichtung 5 umfasst ferner eine Zuführung für Spülluft mit einem entsprechenden Ventil 25. Das Luft-Grobfiltratgemisch kann dann über die Rohrleitung 26 rückwärts in die Grobfilter 2a/b gedrückt werden wonach dieses mit dem Schmutz in den Abfluss 27 befördert wird. Dazu sind entsprechende 3/2wegeventile 13, 14, 11, 12 vorgesehen, die so geschaltet werden können, dass jeweils ein Filter rückgespült wird, während der andere in Betrieb ist.

Vor und hinter den Filtern 2a, b können entsprechende Drucksensoren angeordnet sein, die den Differenzdruck vor und hinter den entsprechenden Grobfiltern 2a, b ermitteln ,der mit einem Sollwert verglichen wird. Übersteigt der gemessene Differenzdruck den vorbestimmten Sollwert, so wird für einen entsprechenden Filter ein Rückspülvorgang eingeleitet.

Die Ableitung 6 zweigt hier von der ringförmig geführten Rückführleitung 4 ab. Es wäre jedoch auch möglich, dass diese Ableitung 6 direkt am Ausgang des Cross-Flow-Filters ansetzt. Vorteilhafterweise ist die Ableitung 6 in einem Bereich vom hinteren Ende A des Cross-Flow-Filters 3 bis zu dem Punkt B, an dem neues Grobfiltrat von den Filtern 2a/b dem Kreis K zugeführt wird, angeordnet. Die Vorrichtung kann eine weitere Abzweigleitung 8 umfassen, zum Verwerfen eines Teils des im Kreislauf geführten Grobfiltrats. Ist beispielsweise bei der Reinigung der Hauptlauge die Konzentration im Kreis K zu hoch, kann zusätzlich über die Ableitung 8 ein bestimmter Teil verworfen werden. Dazu ist das Ventil 29 vorgesehen. Vor und nach dem Cross-Flow-Filtermodul können Drucksensoren ( nicht dargestellt) angeordnet sein , die die Druckdifferenz, d.h. den transmembranen Druck messen. Dieser Differenzdruck wird mit einem Sollwert verglichen. Überschreitet der ermittelte Differenzdruck den Sollwert, so wird Grobfiltrat, das im Kreislauf K geführt wird, abgezweigt.

Bei der Aufbereitung von Nachlauge kann über die Abzweigleitung 8 das im Kreislauf geführte Grobfiltrat auch zur Vorbehandlung, d. h. beispielsweise zum Vorlaugebad geleitet werden. Für die Qualität der Reinigungslauge im Vorlaugebad reicht die Grobfiltration aus. Darüber hinaus ist es hier vorteilhaft, dass im Grobfiltrat die Tenside nicht ausgefiltert wurden und in der Lauge verbleiben. Die Abzweigleitung 8 setzt hier an der Rückführleitung 4 an, kann aber auch, wie zuvor beschrieben am Cross-Flow-Filter angrenzen.

Das erfindungsgemäße Verfahren wird zunächst im Zusammenhang mit der Reinigung von Hauptlauge eines Hauptlaugebads 28 einer Flaschenreinigungsmaschine 10 näher erläutert. Zunächst wird über eine Pumpe 9 über die Leitung 24 verunreinigte Reinigungslauge aus dem Hauptlaugebad 28 in die erfindungsgemäße Vorrichtung 1 gepumpt. Verunreinigte Reinigungslauge passiert dabei die Grobfilter 2a/b, wobei die Ventile 11/12, 13/14 so geschaltet sind, dass die Reinigungslauge durch die Filter in Pfeilrichtung zur Leitung 30 fließt. Die Grobfilter 2a/b sind dabei von der Spülleitung 26 abgekoppelt. Die grobfiltrierte Reinigungslauge wird dann über die Pumpe 10 in den Cross-Flow-Filter 3 gepumpt. Quer zur Flussrichtung des Grobfiltrats tritt das Grobfiltrat durch die Membran und wird somit feinfiltriert. Das Feinfiltrat wird über die Leitung 7 bei geöffnetem Ventil 16 dem Hauptlaugebad 28 rückgeführt. Das Grobfiltrat, das den Cross-Flow-Filter 3 passiert wird über die Rückführleitung 3 im Kreis K geführt wobei am Punkt B neues Grobfiltrat dem Kreislauf zugeführt wird. Zur Verhinderung der Aufkonzentrierung der Verunreinigungen im Kreislauf K wird ein bestimmter Teil des Grobfiltrats über die Leitung 6 der Rückspüleinrichtung 5, bzw. einem Spülbehälter der Rückspüleinrichtung 5 zugeführt. Dabei kann kontinuierlich ein bestimmter Teil aus dem Kreislauf K abgeführt werden oder aber getaktet in bestimmten Zeitintervallen eine bestimmte Menge an Grobfiltrat abgeleitet werden. Dieses abgeführte Grobfiltrat, das dann im Behälter der Rückspüleinrichtung 5 lagert kann dann in vorteilhafter Weise verwendet werden, um einen der beiden Grobfilter 2a/b rückzuspülen.

Zum Rückspülen des Grobfilters 2a/b wird dazu beispielsweise das Ventil 13 so geschaltet, dass die Rückspülleitung 26 mit dem Grobfilter 2a verbunden ist, der Grobfilter 2a jedoch nicht weiter mit der Leitung 30 verbunden ist. Ferner wird das Ventil 11 so eingestellt, dass der Grobfilter 2a mit dem Abfluss 27 verbunden ist, jedoch nicht weiter mit der Leitung zur Pumpe 9. Zum Rückspülen wird dabei Luft in den Spülbehälter eingeblasen. Das Luft-Grobfiltratgemisch wird dann durch die Rohrleitung 26 rückwärts durch den Filter 2a gedrückt und danach mit dem Schmutz in den Abfluss befördert. Während der Grobfilter 2a rückgespült wird verbleiben die Ventile 12/14 in einer Position in der der Filter 2b die Grobfiltration übernimmt, wobei die Reinigungslauge in Pfeilrichtung in die Leitung 30 geleitet wird. Nach erfolgter Rückspülung werden die Ventile 11/13 wieder in ihre Arbeitsposition zurückgestellt, sodass die Grobfiltration auch wieder über den Filter 2a erfolgen kann. Nachfolgend kann dann in gleicher Weise der Grobfilter 2b durch entsprechende Schalten der Ventile 11/12/13/14 rückgespült werden. Wie zuvor beschrieben, kann der Rückspülvorgang für einen Grobfilter 2 dann eingeleitet werden, wenn die gemessene Druckdifferenz vor und nach dem Grobfilter einen bestimmten Sollwert übersteigt. Somit ist gewährleistet, dass die Reinigungslauge kontinuierlich aufbereitet werden kann und der Prozess auch beim Rückspülen nicht unterbrochen werden muss. Dadurch dass gleichzeitig ein Aufkonzentrieren der Reinigungslauge im Cross-Flow-Filter Kreislauf K verhindert wird setzt auch der Cross-Flow-Filter nicht zu, sodass ein kontinuierlicher Betrieb möglich ist. Sollte die Konzentration im Kreislauf K zu groß werden, so kann zusätzlich über die Leitung 8 Grobfiltrat aus dem Kreislauf K abgeführt werden, indem das Ventil 29 entsprechend geöffnet wird. Dieses abgeführte Grobfiltrat wird dann verworfen.

In vorteilhafter Weise kann hier das Aufkonzentrieren verhindert werden ohne dass ein großer Feedbehälter notwendig ist. So können kleine Volumina in der Filtrationseinheit realisiert werden, was zu einer minimierten Wärmeabstrahlung führt. Weiterhin kann das ganze System unter Druck stehen, was minimierte Pumpleistungen zur Folge hat. Kleine Füllvolumina bieten zusätzlich den Vorteil dass die Verfügbarkeit der Flaschenreinigungsmaschine steigt, da ein Nachfüllen der Flaschenreinigungsmaschine bei der Inbetriebnahme des Filtrationssystems nicht nötig ist.

Bei der Reinigung von Nachlauge erfolgt das Verfahren wie im Zusammenhang mit der Hauptlauge erläutert wurde. Auch hier wird Grobfiltrat aus dem Membranfiltrationskreislauf zum Rückspülen verwendet, wie zuvor erläutert wurde. Im Unterschied zu dem vorherigen Ausführungsbeispiel wird jedoch, wenn notwendig, Grobfiltrat über die Leitung 8 abgeführt und nicht verworfen, sondern einem Vorlaugebad 32 zugeführt.

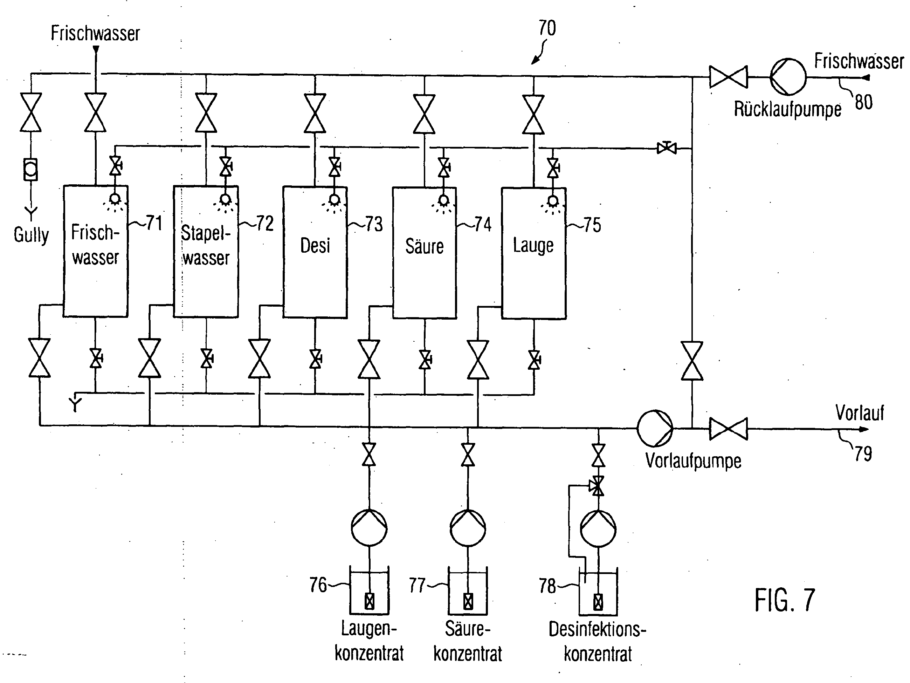

Figur 7 zeigt das Grundschema einer Stapeltank-CIP-Anlage (Cleaning in Process). Eine solche Anlage 70 weist einen Frischwassertank 71, einen Stapelwassertank 72, einen Desinfektionsflüssigkeitstank 73, einen Säuretank 74 sowie einen Laugetank 75 auf. Ferner kann eine CIP-Anlage ebenfalls eine Zuführung für Laugenkonzentrat 76, für Säurekonzentrat 77 und für Desinfektionskonzentrat 78 aufweisen. Die Reinigungsmittelkonzentrate 76, 77, 78 werden mit dem Reinigungswasser in den entsprechenden Desinfektionsflüssigkeits-, Säure-, bzw. Laugetanks 73, 74, 75 auf die entsprechende Konzentration verdünnt. Über die Leitung 79 kann die entsprechende Reinigungsflüssigkeit aus den Tanks 73, 74, 75 dem zu reinigenden Objekt (Tanks mit Reinigungsgerät oder Rohrleitungen) zugeführt werden und über die Rückführleitung 80 den entsprechenden Tanks rückgeführt werden. Über eine nicht dargestellte Leitung 24 kann dann die entsprechende Reinigungsflüssigkeit aus den Tanks 73 oder 74 oder 75 der in Figur 1 gezeigten Vorrichtung zugeführt werden. Das Feinfiltrat kann dann über die in Figur 1 gezeigte Feinfiltratleitung 7 erneut dem jeweiligen Tank 73, 74 oder 75 zugeführt werden. Das über die Abflussleitung 8 in Figur 1 abgeführte Grobfiltrat kann verworfen werden.

Es ist vorteilhaft, dass das gleiche Fließschema zur Hauptlaugen- und Nachlaugenreinigung einer Flaschenreinigungsmaschine 10 sowie für CIP-Anlagen 70 verwendet werden kann. Dies bringt fertigungstechnische Vorteile mit sich, da für alle Anwendungen die gleiche Vorrichtung gebaut werden kann, die sich lediglich durch die Porenweite der Membran des Cross-Flow-Filters 3 unterscheidet. Somit kann die Reinigungsflüssigkeit durch eine kostengünstige Vorrichtung gereinigt werden. Dadurch, dass das im Membranfiltrationskreislauf abgeführte Grobfiltrat nicht komplett verworfen, sondern zum Rückspülen verwendet wird, können Prozessmedien sowie Energie gespart werden.

## Patentansprüche

1. Vorrichtung (1) zum Aufbereiten von, in Brauereien anfallenden Reinigungsflüssigkeiten, umfassend:
- mindestens einen rückspülbaren Grobfilter (2a, b) zur Grobfiltration der Reinigungsflüssigkeit,
- einen Cross-Flow-Filter (3) zur Feinfiltration des Grobfiltrats aus dem mindestens einen Grobfilter (2a, b), wobei der Filter ein Druckgehäuse (42) und mindestens eine Multitubemembranfilterkerze (40) umfasst,
- eine Rückführleitung (4), durch die das Grobfiltrat durch den Cross-Flow-Filter (3) im Kreis (K) geführt wird,
- eine Rückspüleinrichtung (5) zum Rückspülen des Grobfilters (2a, b),
- eine Ableitung (6), die von dem Kreis (K) abzweigt und mit der Rückspüleinrichtung (5) verbunden ist, zum Rückspülen des Grobfilters (2a, b) mit dem, durch den Cross-Flow-Filter (3) im Kreis geführten Grobfiltrat.

2. Vorrichtung nach Anspruch 1,
**dadurch gekennzeichnet, dass**
mindestens zwei Grobfilter (2a, b) parallel angeordnet und im Wechsel rückspülbar sind.

3. Vorrichtung nach Anspruch 1 oder 2,
**dadurch gekennzeichnet, dass**
der Grobfilter (2a, b) Teilchen einer Größe > 50 µm ausfiltert.

4. Vorrichtung nach mindestens einem der Ansprüche 1 bis 3,
**dadurch gekennzeichnet, dass**
der Cross-Flow-Filter (3) eine Porengröße in einem Bereich von <= 2µm, vorzugsweise <= 0,4 µm aufweist.

5. Vorrichtung nach mindestens einem der Ansprüche 1 bis 4,
**dadurch gekennzeichnet, dass**
die Vorrichtung mit einem Hauptlaugebad verbunden ist und als Reinigungsflüssigkeit Hauptlauge aus dem Hauptlaugebad (28) einer Flaschenreinigungsmaschine (10) aufbereitet und eine Feinfiltratleitung (7) umfasst, die das Feinfiltrat aus dem Cross-Flow-Filter (3) erneut dem Hauptlaugebad zuführt.

6. Vorrichtung nach mindestens einem der Ansprüche 1 bis 4,
**dadurch gekennzeichnet, dass**
die Vorrichtung mit einem Nachlaugebad verbunden ist und als Reinigungsflüssigkeit Nachlauge aus dem Nachlaugebad einer Flaschenreinigungsmaschine (10) aufbereitet und eine Feinfiltratleitung (7) umfasst, die das Feinfiltrat aus dem Cross-Flow-Filter erneut dem Nachlaugebad (37) zuführt.

7. Vorrichtung nach Anspruch 5,
**dadurch gekennzeichnet, dass**
der Kreis (K) eine weitere Abzweigleitung (8) umfasst, zum Verwerfen eines Teils des im Kreislauf geführten Grobfiltrats.

8. Vorrichtung nach Anspruch 6,
**dadurch gekennzeichnet, dass**
der Kreis (K) eine weitere Abzweigleitung (8) umfasst, die mit einem Vorlaugebad verbunden ist, zum Zuführen eines Teils des im Kreis geführten Grobfiltrats zu dem Vorlaugebad (32).

9. Vorrichtung nach mindestens einem der Ansprüche 1 bis 4,
**dadurch gekennzeichnet, dass**
der Grobfilter (2a, b) Scheibenfilter ist.

10. Vorrichtung nach mindestens einem der Ansprüche 1 bis 4,
**dadurch gekennzeichnet, dass**
die Vorrichtung Reinigungslauge oder -säure oder Desinfektionsflüssigkeit aus einer CIP-Anlage aufbereitet, und eine Feinfiltratleitung umfasst mit einem entsprechenden Laugen- oder Säuren- oder Desinfektionsflüssigkeitstank (75, 74, 73) verbunden ist und die das Feinfiltrat dem entsprechenden Laugen- oder Säuren- oder Desinfektionsflüssigkeitstank (75, 74, 73) zuführt.

11. Verfahren zum Aufbereiten von, in Brauereien anfallenden Reinigungsflüssigkeiten, wobei
Reinigungsflüssigkeit mit Hilfe eines Grobfilters (2a, b) grob filtriert wird,
das Grobfiltrat zur Erzeugung von Feinfiltrat durch einen Cross-Flow-Filter (3) im Kreis (K) durch den Cross-Flow-Filter (3) geführt wird, wobei der Filter ein Druckgehäuse (42) und mindestens eine Multitubemembranfilterkerze (40) umfasst und
ein Teil des im Kreis (K) geführten Grobfiltrats abgezweigt und einer Rückspüleinrichtung (5) zugeführt wird, zum Rückspülen des Grobfilters (2a, b).

12. Verfahren nach Anspruch 11,
**dadurch gekennzeichnet, dass**
als Reinigungsflüssigkeit Hauptlauge aus einem Hauptlaugebad (28) einer Flaschenreinigungsmaschine (10) aufbereitet wird und das erzeugte Feinfiltrat aus dem Cross-Flow-Filter (3) erneut dem Hauptlaugebad zugeführt wird.

13. Verfahren nach Anspruch 11,
**dadurch gekennzeichnet, dass**
als Reinigungsflüssigkeit Nachlauge aus einem Nachlaugebad (37) einer Flaschenreinigungsanlage aufbereitet wird und das Feinfiltrat aus dem Cross-Flow-Filter erneut dem Nachlaugebad zugeführt wird.

14. Verfahren nach Anspruch 11,
**dadurch gekennzeichnet, dass**
als Reinigungsflüssigkeit Reinigungslauge oder -säure oder Desinfektionsflüssigkeit aus einer CIP-Anlage aufbereitet wird und das Feinfiltrat aus dem Cross-Flow-Filter erneut einem entsprechenden Laugen- oder Säuren- oder Desinfektionsflüssigkeitstank zugeführt wird.

15. Verfahren nach Anspruch 12 oder 14,
**dadurch gekennzeichnet, dass**
dem im Kreislauf geführten Grobfiltrat weiter ein Teil abgezweigt wird, der verworfen wird.

16. Verfahren nach Anspruch 13,
**dadurch gekennzeichnet, dass**
dem im Kreislauf geführten Grobfiltrat weiter ein Teil abgezweigt wird, der einem Vorlaugebad (32) zugeführt wird.

17. Verfahren nach mindestens einem der Ansprüche 11 bis 16,
**dadurch gekennzeichnet, dass**
kontinuierlich ein Teil des im Kreislauf geführten Grobfiltrats abgeführt wird.

18. Verfahren nach einem der Ansprüche 11 bis 16,
**dadurch gekennzeichnet, dass**
der abgeführte Teil des Grobfiltrats getaktet abgeführt wird.

19. Verfahren nach mindestens einem der Ansprüche 11 bis 17,
**dadurch gekennzeichnet, dass**
die Reinigungsflüssigkeit mit Hilfe von mindestens zwei, parallel angeordneten Grobfiltern wechselweise oder gleichzeitig gefiltert wird.

## Claims

1. Device (1) for processing cleaning fluids used in breweries, comprising:
- at least one back-flushable coarse filter (2a, b) for coarse filtration of the cleaning fluid,
- a cross-flow filter (3) for fine filtration of the coarse filtrate from the at least one coarse filter (2a, b), and the filter comprises a pressure housing (42) and at least one multi-tube membrane filter candle (40),
- a return line (4) through which the coarse filtrate is fed through the cross-flow filter (3) in the circuit (K),
- a back-flushing unit (5) for back-flushing the coarse filter (2a, b),
- a discharge line (6) which branches off from the circuit (K) and is connected to the back-flushing unit (5) for back-flushing the coarse filter (2a, b) with the coarse filtrate fed through the cross-flow filter (3) in the circuit.

2. Device as claimed in claim 1,
**characterised in that**
at least two coarse filters (2a, b) are disposed in a parallel arrangement and can be back-flushed in alternation.

3. Device as claimed in claim 1 or 2,
**characterised in that**
the coarse filter (2a, b) filters out particles with a size > 50 µm.

4. Device as claimed in at least one of claims 1 to 3,
**characterised in that**
the cross-flow filter (3) has a pore size in a range of <= 2 µm, preferably <= 0.4 µm.

5. Device as claimed in at least one of claims 1 to 4,
**characterised in that**
the device is connected to a main lye bath and processes main lye from the main lye bath (28) of a bottle cleaning machine (10) as cleaning fluid and has a fine filtrate line (7) which feeds the fine filtrate from the cross-flow filter (3) back to the main lye bath.

6. Device as claimed in at least one of claims 1 to 4,
**characterised in that**
the device is connected to a finishing lye bath and processes finishing lye from the finishing lye bath of a bottle cleaning machine (10) as cleaning fluid and has a fine filtrate line (7) which feeds the fine filtrate from the cross-flow filter back to the finishing lye bath (37).

7. Device as claimed in claim 5,
**characterised in that**
the circuit (K) has another branch line (8) for discarding of a part of the coarse filtrate fed through the circuit.

8. Device as claimed in claim 6,
**characterised in that**
the circuit (K) has another branch line (8) which is connected to a pre-lye bath for feeding a part of the coarse filtrate fed through the circuit to the pre-lye bath (32).

9. Device as claimed in at least one of claims 1 to 4,
**characterised in that**
the coarse filter (2a, b) is a disc filter.

10. Device as claimed in at least one of claims 1 to 4,
**characterised in that**
the device processes cleaning lye or cleaning acid or liquid disinfectant from a CIP plant and has a fine filtrate line connected to a corresponding lye or acid or liquid disinfectant tank (75, 74, 73) for feeding the fine filtrate to the corresponding lye or acid or liquid disinfectant tank (75, 74, 73).

11. Method for processing cleaning fluids used in breweries, whereby
cleaning fluid is coarsely filtered with the aid of a coarse filter (2a, b),
in order to create a fine filtrate by means of a cross-flow filter (3) in the circuit (k), the coarse filtrate is fed through the cross-flow filter (3), and the filter comprises a pressure housing (42) and at least one multi-tube membrane filter candle (40) and
a part of the coarse filtrate fed through the circuit (K) is branched off and fed to a back-flushing unit (5) for back-flushing the coarse filter (2a, b).

12. Method as claimed in claim 11,
**characterised in that**
main lye from a main lye bath (28) of a bottle cleaning machine (10) is processed as cleaning fluid and the resultant fine filtrate from the cross-flow filter (3) is fed back to the main lye bath.

13. Method as claimed in claim 11,
**characterised in that**
finishing lye from a finishing lye bath (37) of a bottle cleaning plant is processed as cleaning fluid and the fine filtrate from the cross-flow filter is fed back to the finishing lye bath.

14. Method as claimed in claim 11,
**characterised in that**
cleaning lye or cleaning acid or liquid
disinfectant from a CIP plant is processed as cleaning fluid and the fine filtrate from the cross-flow filter is fed back to a corresponding lye or acid or liquid disinfectant tank.

15. Method as claimed in claim 12 or 14,
**characterised in that**
another part of the coarse filtrate fed through the circuit is branched off and discarded.

16. Method as claimed in claim 13,
**characterised in that**
another part of the coarse filtrate fed through the circuit is branched off and fed to a pre-lye bath (32).

17. Method as claimed in at least one of claims 11 to 16,
**characterised in that**
a part of the coarse filtrate fed through the circuit is continuously discharged.

18. Method as claimed in one of claims 11 to 16,
**characterised in that**
the discharged part of the coarse filtrate is discharged on a clocked basis.

19. Method as claimed in at least one of claims 11 to 17,
**characterised in that**
the cleaning fluid is filtered with the aid of at least two coarse filters disposed in a parallel arrangement in alternation or simultaneously.

## Revendications

1. Dispositif (1) destiné à traiter des liquides de nettoyage utilisés dans des brasseries, comprenant :
- au moins un filtre grossier lavable à contre-courant (2a, b) pour une filtration grossière du liquide de nettoyage,
- un filtre à écoulement transversal (3) pour une filtration fine du filtrat grossier provenant du filtre grossier (2a, b), le filtre comprenant une enveloppe de pression (42) et au moins une bougie filtrante à membrane multitube (40),
- une ligne de retour (4) par l'intermédiaire de laquelle le filtrat grossier est introduit dans le circuit (K) via le filtre à écoulement transversal (3),
- des moyens de lavage à contre-courant (5) destinés à laver le filtre grossier (2a, b) à contre-courant,
- une ligne d'évacuation (6) bifurquant du circuit (K) et reliée aux moyens de lavage à contre-courant (5), pour laver le filtre grossier (2a, b) à contre-courant en utilisant le filtrat grossier introduit dans le circuit via le filtre à écoulement transversal (3).

2. Dispositif selon la revendication 1, **caractérisé en ce qu'**au moins deux filtres grossiers (2a, b) sont agencés en parallèle et peuvent être lavés à contre-courant de manière alternée.

3. Dispositif selon la revendication 1 ou 2, **caractérisé en ce que** le filtre grossier (2a, b) extrait par filtration des particules ayant une taille > 50 µm.

4. Dispositif selon au moins l'une quelconque des revendications 1 à 3, **caractérisé en ce que** le filtre à écoulement transversal (3) présente une taille de pore située dans une plage ≤ 2 µm, de préférence ≤ 0,4 µm.

5. Dispositif selon au moins l'une quelconque des revendications 1 à 4, **caractérisé en ce que** le dispositif est relié à un bain de solution caustique principale et traite comme un liquide de nettoyage la solution caustique principale provenant du bain de solution caustique principale (28) d'une machine de nettoyage de bouteilles (10), et comprend une ligne de filtrat fin (7) qui réachemine le filtrat fin du filtre d'écoulement transversal (3) jusqu'au bain de solution caustique principale.

6. Dispositif selon au moins l'une quelconque des revendications 1 à 4, **caractérisé en ce que** le dispositif est relié à un bain de solution post-caustique et traite comme un liquide de nettoyage, la solution post-caustique provenant du bain de solution post-caustique d'une machine de nettoyage de bouteilles (10), et comprend une ligne de filtrat fin (7) qui réachemine le filtrat fin du filtre d'écoulement transversal jusqu'au bain de solution post-caustique (37).

7. Dispositif selon la revendication 5, **caractérisé en ce que** le circuit (K) comprend une ligne de dérivation supplémentaire (8) pour jeter une partie du filtrat grossier introduit dans le circuit.

8. Dispositif selon la revendication 6, **caractérisé en ce que** le circuit (K) comprend une ligne de dérivation supplémentaire (8) reliée à un bain de solution pré-caustique pour acheminer une partie du filtrat grossier introduit dans le circuit jusqu'au bain de solution pré-caustique (32).

9. Dispositif selon au moins l'une quelconque des revendications 1 à 4, **caractérisé en ce que** le filtre grossier (2a, b) est un filtre à disque.

10. Dispositif selon au moins l'une quelconque des revendications 1 à 4, **caractérisé en ce que** le dispositif traite une solution caustique de nettoyage ou un acide de nettoyage ou un liquide désinfectant provenant d'une installation CIP, et comprend une ligne de filtrat fin reliée à un réservoir de solution caustique de nettoyage ou d'acide de nettoyage ou de liquide désinfectant correspondant (75, 74, 73), et qui achemine le filtrat fin jusqu'au réservoir de solution caustique de nettoyage ou d'acide de nettoyage ou de liquide désinfectant correspondant (75, 74, 73).

11. Procédé pour traiter des liquides de nettoyage utilisés dans des brasseries, comprenant :
la filtration grossière d'un liquide de nettoyage à l'aide d'un filtre grossier (2a, b),
l'introduction du filtrat grossier dans le circuit (K) par l'intermédiaire d'un filtre à écoulement transversal (3) pour générer un filtrat fin à travers le filtre à écoulement transversal (3), le filtre comprenant une enveloppe de pression (42) et au moins une bougie filtrante à membrane multitube (40), et
la déviation d'une partie du filtrat grossier introduit dans le circuit (K) et son acheminement jusqu'à des moyens de lavage à contre-courant (5) pour laver le filtre grossier (2a, b) à contre-courant.

12. Procédé selon la revendication 11, **caractérisé en ce qu'**il comprend le traitement comme un liquide de nettoyage d'une solution caustique principale provenant d'un bain de solution caustique principale (28) d'une machine de nettoyage de bouteilles (10), et le réacheminement du filtrat fin généré du filtre à écoulement transversal (3) jusqu'au bain de solution caustique principale.

13. Procédé selon la revendication 11, **caractérisé en ce qu'**il comprend le traitement comme un liquide de nettoyage d'une solution post-caustique provenant d'un bain de solution post-caustique (37) d'une installation de nettoyage de bouteilles, et le réacheminement du filtrat fin du filtre à écoulement transversal (3) jusqu'au bain de solution post-caustique.

14. Procédé selon la revendication 11, **caractérisé en ce qu'**il comprend le traitement comme un liquide de nettoyage d'une solution caustique de nettoyage ou d'un acide de nettoyage ou d'un liquide désinfectant provenant d'une installation CIP, et le réacheminement du filtrat fin du filtre à écoulement transversal jusqu'à un réservoir de solution caustique ou d'acide ou de liquide désinfectant correspondant.

15. Procédé selon la revendication 12 ou 14, **caractérisé en ce qu'**il comprend la déviation également d'une partie du filtrat grossier introduit dans le circuit et la jeter.

16. Procédé selon la revendication 13, **caractérisé en ce qu'**il comprend la déviation également d'une partie du filtrat grossier introduit dans le circuit et son acheminement jusqu'à un bain de solution pré-caustique (32).

17. Procédé selon au moins l'une quelconque des revendications 11 à 16, **caractérisé en ce qu'**une partie du filtrat grossier introduit dans le circuit est évacuée de manière continue.

18. Procédé selon l'une quelconque des revendications 11 à 16, **caractérisé en ce que** la partie évacuée du filtrat grossier est évacuée de manière cadencée.

19. Procédé selon au moins l'une quelconque des revendications 11 à 17, **caractérisé en ce que** le liquide de nettoyage est filtré de manière alternée ou simultanée à l'aide d'au moins deux filtres grossiers agencés en parallèle.
